# EUROPEAN PATENT APPLICATION

(11) **EP 2 623 179 A1**
(43) Date of publication of application: **07.08.2013**
(21) Application number: 12154131.2
(22) Date of filing: 06.02.2012
(51) Int. Cl.: B01D 53/06, B01D 53/26, F24F 3/14

(54) **A rotary air drying apparatus**

(71) Applicant: Cotes A/S, 4230 Skaelskør (DK)
(72) Inventor: Clausen, Jannik, 4700 Næstved (DK)
(74) Representative: Inspicos A/S

(57) **Abstract**

A rotary air drying apparatus for use in connection with a dry chamber defining a dry-chamber inlet and a dry-chamber outlet, the rotary air drying apparatus comprising a front and a rear stage adsorption-rotor, which are arranged such that air is dried in several steps prior to entering the dry room. Air is recirculated into a point between the two adsorption rotors.

## Description

### FIELD OF THE INVENTION

The present invention relates to a rotary air drying apparatus for use in connection with a dry chamber.

### BACKGROUND OF THE INVENTION

In the operation of low dew point dry rooms, special dehumidification apparatuses are used. These apparatuses are special adsorption dehumidification apparatuses which are adapted to dehumidify the air to a very low dew point. Often a dew point of minus 45 degrees Celsius must be maintained in the dry room. However, as human beings are typically working in the room, their respiration alone causes the dew point to be raised significantly. Thus, the air blown into the room is often dehumidified to a dew point below minus 60 degrees Celsius or even below minus 80 degrees Celsius.

Moreover, such systems require a large amount of energy to operate. This is partly due to the requirements for heating power for the regeneration air and partly due to the energy required for cooling of the air during various stages of the process. It is thus desirable to provide a system wherein the cooling needs and the heating needs are minimized such that energy may be saved.

The process air, the purge air and the regeneration air holds different conditions ranging from 0.0066 g/kg for the dry air (corresponding to a dew point of minus 60 degrees Celsius) to 5-12 g/kg for the regeneration air (when the moisture is transferred from the adsorption material to the regeneration air). When air of various humidity levels is separated by essentially flexible gaskets only, a 100 percent separation of the various humidity levels is essential for the effectiveness of the drying apparatus. Thus any leaks of moisture/air from one side of a gasket to another side, must be compensated for by using more energy to achieve the desired dew point.

Accordingly, it is an object of one or more embodiments of the present invention to provide a dehumidification system which overcomes the above disadvantages.

### DESCRIPTION OF THE INVENTION

In a FIRST aspect, the present invention relates to a rotary air drying apparatus for use in connection with a dry chamber defining a dry-chamber inlet and a dry-chamber outlet, the rotary air drying apparatus comprising:
- a front-stage adsorption-rotor comprising a front-stage adsorption-material and defining a front-stage humidity-removing-section which is adapted to remove moisture in air passing there-through, and a front-stage regeneration-section which is adapted to regenerate the front-stage adsorption-material,
- a rear-stage adsorption-rotor comprising a rear-stage adsorption-material and defining a rear-stage humidity-removing-section which is adapted to remove moisture in air passing there-through and a rear-stage regeneration-section which is adapted to regenerate the rear-stage adsorption-material, the rear-stage adsorption-rotor further comprising a rear-stage purge-section;
- a pre-cooler unit defining a pre-cooler inlet and a pre-cooler outlet, the pre-cooler unit being arranged to cool fresh air entering the pre-cooler inlet so as to remove moisture from the fresh air by lowering its dew point below a first predetermined dew-point, the pre-cooler outlet being arranged to supply pre-cooled air to the front-stage humidity-removing-section;
- an inter-cooler unit defining an inter-cooler inlet and an inter-cooler outlet, the inter-cooler outlet being fluidly connected to the rear-stage humidity-removing-section such that inter-cooled air flows from the inter-cooler outlet to the rear-stage humidity-removing-section, wherein the inter-cooler unit is adapted to lower the dew-point of air to a second predetermined dew point, and wherein the inter-cooler inlet is fluidly connected to the front-stage humidity removing section;
- a first heating-unit defining a first heating-inlet and a first heating-outlet, the first heating-inlet being fluidly connected to the rear-stage purge-section and the first heating-outlet being fluidly connected to the rear-stage regeneration-section;
wherein the rear-stage regeneration-section is fluidly connected to the front-stage regeneration-section;
wherein air exiting the front-stage humidity removing section is mixed with return air exiting the dry chamber outlet such that a resulting mixed air is generated;
wherein the resulting air mixtureis fed into the inter-cooler inlet; and
wherein the rear-stage purge-section is supplied with the mixed air and/or inter-cooled air.

The present invention provides for improved energy efficiency by recirculating the air from the dry room to a point downstream the front-stage adsorption-rotor. Thus, the recurculated air is mixed with air which has already been dried in both the pre-cooler and the front-stage adsorption-rotor. As the air is mixed with pre-dries air, the resulting mixture has a relatively low dew point, as the dew point of the recirculated air is normally lower than the air exiting the front-stage humidity-removing-section.

During operation, the dry chamber will normally be pressurised such that any leaks in the room causes the dry air to escape the room. Thus, it is prevented that relatively wet air enters the room through such leaks, which is desirable as such air would cause the humidity in of the air in the dry room to increase to an undesirable level.

The dry room may be rooms which are used in manufacturing processes where the parts/materials used in the process may react with the humidity of the air or where even the slighted droplet may jeopardize the final product. One example is manufacturing of batteries such as lithium batteries or manufacturing of integrated circuits on chips.

The dry room comprises one or more dry-chamber inlets by means of which, the dried air is blown into the dry room, and one or more dry-chamber outlets by means of which the air from the dry room is vented.

In the context of the present invention, the term 'rotary air drying apparatus' shall be understood as a apparatus for drying air, which apparatus is designed such that it is rotatable in such a way that a first part of the apparatus is used to remove moisture from air while a second part of the apparatus is used to remove moisture from the apparatus.

It will be appreciated that the rotary air drying apparatus comprises at least two adsorption-rotors, such as two, three, four, five etc. In cases where two rotary air drying apparatuses are provided, the first may be designated the 'front-stage adsorption-rotor' and the second may be designated the 'rear-stage adsorption-rotor'. If a third adsorption-rotor is provided, between the front-stage adsorption-rotor and the rear-stage adsorption-rotor, this third adsorption-rotor may be designated the 'intermediate-stage adsorption-rotor'.

Each of the adsorption-rotors accommodates an adsorption-material. Synonyms may be moisture-removing material, vapour-removing material and humidity-lowering material. Examples of adsorption-materials are silicagel, Molsieve, aluminiumoxid and similar with high extraxtion of water molecules.

Moreover, each adsorption-rotor defines at least one humidity-removing-section and one regeneration-section. The humidity-removing-section is a section through which air pass in order to have moisture removed from the air, such that the dew-point of the air is lowered. The moisture is removed due to the provision of the adsorption-material which causes the moisture to be adsorbed. In order to regenerate the adsorption-material, air blows through the regeneration-section. The air passing through the regeneration-section causes the moisture on the adsorption material to evaporate. Thus it will be appreciated that the drier the air passing through the regeneration section is, the more moisture may be removed.

In the context of the present invention the term 'adsorption' shall be understood as the adhesion of atoms, ions, biomolecules or molecules of gas, liquid, or dissolved solids to a surface. Adsorption is to be distinguished from absorption in which atoms, molecules, or ions enter gas, liquid, or solid material.

Except form the humidity-removing-section and the regeneration section, the rear-stage adsorption-rotor also comprises a rear-stage purge-section. The purpose of the rear stage purge section is to cool the rear-stage adsorption-material before it rotates into the rear-stage humidity-removing-section. It will be appreciated that the colder the adsorption material is, the more vapor will condensate on the adsorption-material, and thus the more the humidity of the air passing through the rear-stage humidity-removing-section may be lowered. Moreover, passing the air through the purge-section causes the temperature of the air to be elevated prior to the air passing though the first heating-unit. The effect is that less energy is needed to elevated the air to the desired temperature.

Prior to entering the front-stage humidity-removing-section, the air is passed through a pre-cooler unit. The purpose of the pre-cooler unit is to lover the temperature of the air. By lowering the air temperature, the dew point is also lowered, whereby dew is formed and moisture is removed from the air passing through the pre-cooler. In this way a first removal of moisture in the air is achieved. In one embodiment, the pre-cooler unit is adapted to cool air to a temperature below 15 degrees Celsius, such as below 14 degrees Celsius, such as below 13 degrees Celsius, such as below 12 degrees Celsius, such as below 11 degrees Celsius, such as below 10 degrees Celsius, such as below 9 degrees Celsius, such as below 8 degrees Celsius, such as below 7 degrees Celsius, such as below 6 degrees Celsius, such as below 5 degrees Celsius.

It will be appreciated that the larger the cooling surface of the pre-cooler (or the inter cooler) is, the more moisture may be removed from the air passing through the pre/inter-cooler, provided that the desired temperature of the cooling surface is acheived. One example of a pre-cooler is a large air cooling coil.

The pre-cooler unit is arranged such that air entering the rotary air drying apparatus initially flows into the pre-cooler and subsequently in to the front-stage humidity-removing-section. Subsequently, the air is mixed with return air exiting the dry chamber. The mixture of the return air and the air exiting the front-stage humidity-removing-section is designated the mixed air.

This mixed air then flows into the inter-cooler unit, which lowers the temperature of the mixed-air. By lowering the temperature, the relative humidity in the air increases as the air can contain less vapour. By increasing the relative humidity, more moisture may be removed in the subsequent rear-stage humidity-removing-section

In one embodiment, lowering the dew point of the mixed air will also cause dew to be formed inside the inter-cooler unit such that the inter-cooler unit also serves as a moisture removing section.

In one embodiment, the inter-cooler lowers the temperature of the mixed air to a temperature below 20 degrees Celsius, such as below 19 degrees Celsius, such as below 18 degrees Celsius, such as below 17 degrees Celsius, such as below 16 degrees Celsius, such as below 15 degrees Celsius, such as below 14 degrees Celsius, such as below 13 degrees Celsius, such as below 12 degrees Celsius, such as below 11 degrees Celsius, such as below 10 degrees Celsius, such as below 9 degrees Celsius, such as below 8 degrees Celsius, such as below 7 degrees Celsius, such as below 6 degrees Celsius, such as below 5 degrees Celsius.

It will be appreciated that the colder the air is when exiting the rear-stage humidity-removing-section, the more energy must be used to elevate the temperature of the air prior to it entering the dry room. Thus it may be desirable only to cool the air in the inter-cooler unit to a temperature in the range of 15-18 degrees Celsius.

In one embodiment, the second predetermined dew point is in the range 0 to minus 10 degrees Celsius, such as in the range minus 3 to minus 7 degrees Celsius, such as minus 5 degrees Celsius.

It will be appreciated that the inter-cooler unit defines an inter-cooler inlet and an inter-cooler outlet. The inter-cooler outlet is fluidly connected to the rear-stage humidity-removing-section. In one embodiment, the mixed air leaving the inter-cooler unit flows directly into the humidity-removing-section e.g. via a pipe fluidly interconnecting the inter-cooler unit and the humidity-removing-section.

A part of the air is directed into the rear-stage purge-section. This may be done a point upstream and/or downstream relative to the inter-cooler unit. In embodiments, where a part of the air emanates from a point upstream and a part of the air emanates from a point downstream, the ratio of air may be 10/90 upstream/ downstream respectively, i.e. 10 percent from the point upstream and 90 percent from the point downstream. Alternatively, the ratio may be 20/80, or 30/70 or 40/60 or 50/50 or 60/40 or 70/30 or 80/20, or 90/10.

A part of the process air is directed into the rear-stage purge-section. In one embodiment, 10 percent of the process air is directed into the rear-stage purge-section, such as 20 percent, such as 30 percent, such as 40 percent, such as 50 percent, such as 60 percent.

The air which flows in to the purge section is determined by the amount which is needed to re-generate the adsorbent material in the subsequent stages.

In one embodiment, the rotary air drying apparatus according to the present invention comprises two purge sections. A 'prior purge section' positioned prior to the regeneration section and a 'subsequent purge section' positioned subsequent to the regeneration section.

The purpose of the 'subsequent purge section' is to cool the adsorbent material down. Moreover, as the temperature of the regeneration material is high when entering the subsequent purge section, flow of purge air may cause some of the remaining moisture to be removed whereby the adsorbent material is even dryer when entering the humidity-removing-section. In one embodiment, the temperature of the air inside subsequent purge section is in the range 30 to 60 degrees Celsius, such as 45 degrees Celsius.

The purpose of the 'prior purge section' is to ensure that any leaks of air in the relatively wet regeneration section do not flow into the humidity-removing-section. Thus by providing a purge section on both sides of the regeneration section any leaking material is collected and prevented from flowing into the humidity-removing-section. This makes the system less vulnerable to leaking gaskets.

The air leaving the rear-stage purge-section flows into the rear-stage-regeneration-section in which it causes moisture to be removed from the rear-stage adsorption-material. However, it will be appreciated that the warmer the air is, the more moisture may be accumulated in the air. Moreover, it will be appreciated that the warmer the air is, the more energy is provided for causing the moisture to evaporate. Thus a first heating-unit is provided between the rear-stage purge-section and the rear-stage regeneration-section.

In one embodiment, the first heating-unit is operated to ensure that the temperature of the air entering the rear-stage regeneration-section is above 100 degrees Celsius, such as above 110 degrees Celsius, such as above 120 degrees Celsius, such as above 130 degrees Celsius, such as above 140 degrees Celsius, such as above 150 degrees Celsius.

The air leaving the rear-stage regeneration-section is directed into the front-stage regeneration-section, either directly or via one or more other units, as is described below in relation to the second heating-unit.

One or more fans or blowers may be arranged in the system so as to ensure that the air flows at the desired velocity and in the desired direction(s).

In one embodiment, the front-stage adsorption-rotor is configured/adapted/controlled to remove moisture from the pre-cooled air to a dew point below zero degrees Celsius, such as below minus 5 degrees Celsius, such as below minus 10 degrees Celsius, such as below minus 15 degrees, Celsius, such as below minus 20 degrees Celsius.

In one embodiment, the rear-stage adsorption-rotor is configured/adapted/controlled to remove moisture from the mixed air to a dew point below minus 40 degrees Celsius, such as to a dew point below minus 50 degrees Celsius, such as to a dew point below minus 60 degrees Celsius, such as to a dew point below minus 70 degrees Celsius.

The volume of the two adsorption-rotors may be of equal size or of different size. In one embodiment, the front-stage adsorption-rotor defines a front-stage adsorption-volume which is below 40 percent of a rear-stage adsorption-volume of the rear-stage adsorption rotor. In one embodiment, the front-stage adsorption-volume is 90 precent of the rear-stage adsorption-volume, such as 80 percent, such as 70 percent, such as 60 percent, such as 50 percent, such as 40 percent, such as 30 percent, such as 20 percent, such as 10 percent. In the alternative, the rear-stage adsorption-volume is smaller than the front-stage adsorption-volume. As an example the rear-stage adsorption-volume may be 90 precent of the front-stage adsorption-volume, such as 80 percent, such as 70 percent, such as 60 percent, such as 50 percent, such as 40 percent, such as 30 percent, such as 20 percent, such as 10 percent.

As mentioned previously, the return air from the dry chamber and the air exiting the front-stage humidity-removing-section is mixed prior to entering the inter-cooler unit. In one embodiment, the pipe carrying the return air simply is connected to the pipe carrying the air from the front-stage humidity-removing-section. In another embodiment, the rotary air drying apparatus further comprises an air-mixing-chamber into which the return air and the air exiting the front-stage humidity removing section is fed and out of which the mixed air is fed to the inter-cooler.

In order to retrieve moisture from the front-stage adsorption-material, the air entering the front-stage regeneration-section may be heated. Thus the rotary air drying apparatus may further comprising a second heating-unit which defines a second heating-inlet into which air from the rear-regeneration section is fed and a second heating-outlet which is arranged to feed air into the first-regeneration section.

In one embodiment, the second heating-unit is operated to ensure that the temperature of the air entering the front-stage regeneration-section is above 50 degrees Celsius, such as above 60 degrees Celsius, such as above 70 degrees Celsius, such as above 80 degrees Celsius, such as above 90 degrees Celsius, such as above 100 degrees Celsius, such as above 110 degrees Celsius, such as above 120 degrees Celsius, such as above 130 degrees Celsius.

In order to control the operation of the rotary air drying apparatus, the rotary air drying apparatus may comprise a controller which is adapted to control the rotary air drying apparatus on the basis of input from a humidity-sensor provided in the air drying apparatus and/or a temperature-sensor provided in the air drying apparatus so as to ensure a predetermined humidity and/or temperature in an area of the respective sensors.

The rotary air drying apparatus may comprise one humidity-sensor, such as two humidity-sensors, such as three humidity-sensors, such as four humidity-sensors, such as five humidity-sensors etc.

The rotary air drying apparatus may comprise one temperature-sensor, such as two temperature-sensors, such as three temperature-sensors, such as four temperature-sensors, such as five temperature-sensors etc.

In one embodiment, a first temperature-sensor is arranged to determine the temperature of air fed into the front-stage regeneration section. In the latter embodiment, the controller may be adapted to control the air drying apparatus such that the temperature of the air fed into the front-stage regeneration section is above 60 degrees Celsius. Alternatively, the temperature of air fed into the front-stage regeneration section may be above 70 degrees Celsius, such as above 80 degrees Celsius, such as above 90 degrees Celsius, such as above 100 degrees Celsius, such as above 120 degrees Celsius, such as above 140 degrees Celsius, such as above 160 degrees Celsius, such as above 180 degrees Celsius, such as above 200 degrees Celsius.

In order to control the temperature of the air entering the front-stage regeneration section, the second heating unit may be controlled by the controller. Thus in one embodiment, the controller may be adapted to control the second heating-unit so as to control the air drying apparatus such that the temperature of the air fed into the front-stage regeneration section is above 60 degrees Celsius.

In one embodiment, a second temperature-sensor is arranged to determine the temperature of the inter-cooled air and wherein the controller is adapted to control the air drying apparatus such that the temperature of the inter-cooled air is below 25 degrees Celsius, such as below 20 degrees Celsius, such as below 15 degrees Celsius, such as below 10 degrees Celsius, such as below 5 degrees Celsius, such as below 0 degrees Celsius, such as below minus 5 degrees Celsius, such as below minus 10 degrees Celsius, such as below minus 15 or minus 20 degrees Celsius. Typically the temperature of the inter-cooled air is in the range 15-18 degrees Celsius.

In order to control the temperature of the air exiting inter-cooler unit, the inter-cooling unit may be controlled by the controller. Thus in one embodiment, the controller is adapted to control the inter-cooler unit so as to ensure that the inter-cooled air is below 15 degrees Celsius.

Further temperature sensors may be provided. In one embodiment, a temperature sensor is provided upstream relative to the pre-cooler unit. In another embodiment, a temperature sensor is provided between the pre-cooler unit and the front-stage humidity-removing-section. Moreover, a temperature sensor may be arranged to determine the temperature of air exiting the front-stage humidity-removing-section. In one embodiment, a temperature sensor is arranged to determine the temperature of the return air. In one embodiment, a temperature sensor is arranged to determine the temperature of the mixed air. In one embodiment, a temperature sensor is arranged to determine the temperature of air exiting the rear-stage humidity-removing-section. In one embodiment, a temperature sensor is arranged to determine the temperature of air entering the rear-stage purge-section. In one embodiment a temperature sensor is arranged to determine the temperature of air entering the first heating-unit. In one embodiment, a temperature sensor is arranged to determine the temperature of air entering the rear-stage regeneration-section. In one embodiment, a temperature sensor is arranged to determine the temperature of air entering the second heating-unit. In one embodiment, a temperature sensor is arranged to determine the temperature of air exiting the front-stage regeneration-section.

In one embodiment, the controller is adapted to control the first heating-unit such that the temperature of the air exiting the first heating-unit is above 110 degrees Celsius, such as above 125 degrees Celsius, such as above 150 degrees Celsius, such as above 175 degrees Celsius, such as above 200 degrees Celsius. In one embodiment, the temperature of air exiting the first heating-unit is in the range 130-150 degrees Celsius.

Similarly, humidity sensors may be provided and the controller may be adapted to control the humidity-removing sections and the heating-units such that a predetermined humidity is achieved. In one embodiment, a humidity sensor is provided upstream relative to the pre-cooler unit. In another embodiment, a humidity sensor is provided between the pre-cooler unit and the front-stage humidity-removing-section. Moreover, a humidity sensor may be arranged to determine the humidity of air exiting the front-stage humidity-removing-section. In one embodiment, a humidity sensor is arranged to determine the humidity of the return air. In one embodiment, a humidity sensor is arranged to determine the humidity of the mixed air. In one embodiment, a humidity sensor is arranged to determine the humidity of air exiting the rear-stage humidity-removing-section. In one embodiment, a humidity sensor is arranged to determine the humidity of air entering the rear-stage purge-section. In one embodiment a humidity sensor is arranged to determine the humidity of air entering the first heating-unit. In one embodiment, a humidity sensor is arranged to determine the humidity of air entering the rear-stage regeneration-section. In one embodiment, a humidity sensor is arranged to determine the humidity of air entering the second heating-unit. In one embodiment, a humidity sensor is arranged to determine the humidity of air entering the front-stage regeneration-section. In one embodiment, a humidity sensor is arranged to determine the humidity of air exiting the front-stage regeneration-section.

In a SECOND aspect the present invention relates to an air drying system comprising an air drying apparatus according to any of the preceding claims, and a dry chamber according to any of the preceding claims.

The invention according to the second aspect may comprise any combination of features and elements of the invention according to the first aspect.

In a THIRD aspect, the present invention relates to an air drying apparatus for use in connection with a dry chamber defining a dry-chamber inlet and a dry-chamber outlet, the air drying apparatus comprising:
- a front-stage adsorption-apparatus comprising a front-stage adsorption-material and defining a front-stage humidity-removing-section which is adapted to remove moisture in air passing there-through, and a front-stage regeneration-section which is adapted to regenerate the front-stage adsorption-material,
- a rear-stage adsorption-apparatus comprising a rear-stage adsorption-material and defining a rear-stage humidity-removing-section which is adapted to remove moisture in air passing there-through and a rear-stage regeneration-section which is adapted to regenerate the rear-stage adsorption-material, the rear-stage adsorption-apparatus further comprising a rear-stage purge-section;
- a pre-cooler unit defining a pre-cooler inlet and a pre-cooler outlet, the pre-cooler unit being arranged to cool fresh air entering the pre-cooler inlet so as to remove moisture from the fresh air by lowering its dew point below a first predetermined dew-point, the pre-cooler outlet being arranged to supply pre-cooled air to the front-stage humidity-removing-section;
- an inter-cooler unit defining an inter-cooler inlet and an inter-cooler outlet, the inter-cooler outlet being fluidly connected to the rear-stage humidity-removing-section such that inter-cooled air flows from the inter-cooler outlet to the rear-stage humidity-removing-section, wherein the inter-cooler unit is adapted to lower the dew-point of air to a second predetermined dew point, and wherein the inter-cooler inlet is fluidly connected to the front-stage humidity removing section;
- a first heating-unit defining a first heating-inlet and a first heating-outlet, the first heating-inlet being fluidly connected to the rear-stage purge-section and the first heating-outlet being fluidly connected to the rear-stage regeneration-section;
wherein the rear-stage regeneration-section is fluidly connected to the front-stage regeneration-section;
wherein air exiting the front-stage humidity removing section is mixed with return air exiting the dry chamber outlet such that a resulting mixed air is generated;
wherein the resulting air mixture is fed into the inter-cooler inlet; and
wherein the rear-stage purge-section is supplied with the mixed air and/or inter-cooled air.

The invention according to the third aspect may comprise any combination of features and elements of the invention according to the first aspect.

It will be noted that any description relating to the front-stage adsorption-rotor of the invention according to the first aspect may apply to the front-stage adsorption-apparatus according to the third aspect of the invention. However, with the difference that in the third aspect of the invention, the rotor may be any suitable apparatus.

It will be noted that any description relating to the rear-stage adsorption-rotor of the invention according to the first aspect may apply to the rear-stage adsorption-apparatus according to the third aspect of the invention. However, with the difference that in the third aspect of the invention, the rotor may be any suitable apparatus.

It will be noted that any description relating to the rotary air drying apparatus of the invention according to the first aspect may apply to the air drying apparatus according to the third aspect of the invention.

### BRIEF DESCRIPTION OF THE INVENTION

The invention will now be described in further detail with reference to the figures in which:
Fig. 1 discloses an air drying system according to the second aspect of the invention, and

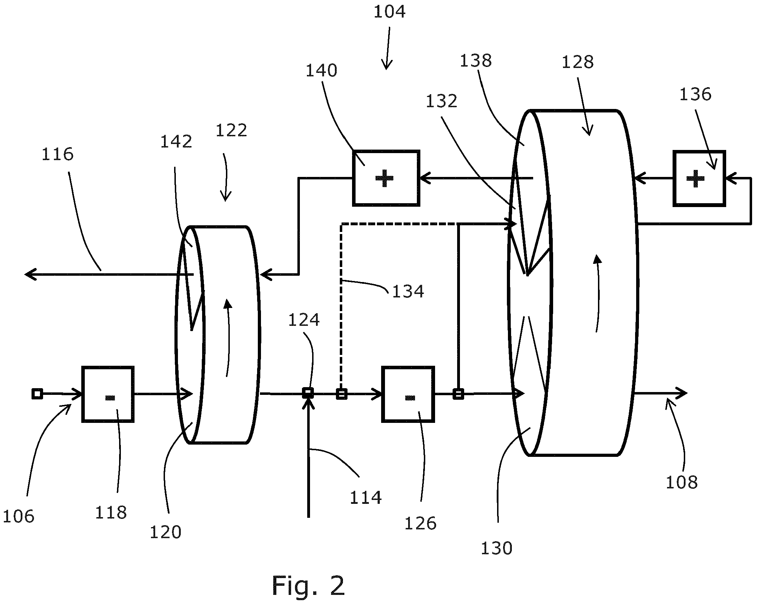

Fig. 2 discloses a rotary air drying apparatus according to the first aspect of the invention.

### DETAILED DESCRIPTION OF THE INVENTION

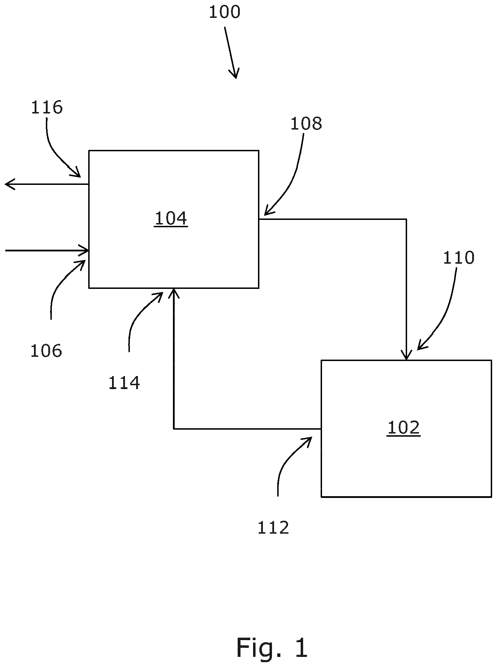

Fig. 1 discloses an air drying system 100 comprising a dry chamber 102 and a rotary air drying apparatus 104. The rotary air drying apparatus 104 comprises an inlet 106 into which fresh air flows during operation, and an outlet 108 out of which dried air flows during operation. The dried air flows from the outlet 108 into a dry chamber inlet 110 of the dry chamber 102. Subsequently, the air flows from a dry chamber outlet 112 of the dry chamber 102 and into a recirculation air inlet 114 of the rotary air drying apparatus 104. A part of the air is used to regenerate the rotary air drying apparatus 104 and subsequently, exits the outlet 116. It will be appreciated that due to leaks in the system and the overpressure provided, a part of the air leaves the system and is not reused. This is not illustrated in the figures. Moreover, in some systems polluted air must be removed from the dry room, thus causing a flow of air out of the room.The rotary air drying apparatus may be controlled on the basis of the temperature and/or the humidity in the dry room. Accordingly, a humidity sensor and/or a temperature sensor may be provided in the dry chamber or in the dry chamber outlet.

It will be appreciated that the entire air drying system should be made as air tight as possible so as to ensure that the dried aid does not escape the room and so as to ensure that air fresh air does not enter the room through the leaks whereby the humidity is increased to an undesired level. The latter may be ensured by pressurizing the room such the any leak in the room will result in a flow of air out of the leak and not in through the leak.

The operation of the rotary air drying apparatus 104 is describe in the following.

The rotary air drying apparatus 104 comprises an inlet 106 into which fresh air is sucked. As the humidity of the fresh air is too high, the fresh air is passed through a pre-cooler 118 which is adapted to cool the air such so as to remove moisture and thus lower the dew point. In most embodiments, the temperature is lowered sufficiently to ensure that a part of the moisture in the air condensates inside the pre-cooler. In some embodiments, the fresh air is cooled to a temperature of 10-15 degrees Celsius, such as 11-12 degrees Celsius.

Subsequently, the pre-cooled air continues into a front-stage humidity-removing-section 120 of a front-stage adsorption-rotor 122. A front-stage adsorption-material is provided inside the front-stage humidity-removing-section, and thus when the pre-cooled air flows into the front-stage humidity-removing-section, a part of the moisture contained in the pre-cooled air is adsorbed by the adsorption-material. In one embodiment, the humidity of the air is reduced by 80 percent, such as by 70 percent, such as by 60 percent, such as by 50 percent.

Subsequently, the air exiting the font-stage humidity-removing-section is directed into an air-mixing-chamber 124 which in the figures is illustrated as a small dot but which may define an inner volume. Inside the air-mixing-chamber 124, the air exiting the front-stage humidity-removing-section is mixed with return air from the dry chamber, which enters the air-mixing-chamber 124 through the recirculation air inlet 114. It will be appreciated that the humidity of the return air normally will be lower than the humidity of the air exiting the front-stage humidity-removing-section.

After the air-mixing-chamber 124, the mixed air flows into a inter-cooler unit 126 in which the air is cooled so as to increase the relative humidity of the air. In some embodiments, inter-cooler unit 126 causes a part of the moisture in the mixed air to form dew inside the inter-cooler unit 126 whereby a part of the moisture is removed from the mixed air.

Subsequently, the inter-cooled air is directed into the rear-stage adsorption-rotor 128. A part of the inter-cooled air is directed into the rear-stage humidity-removing-section 130, while the remaining part of the inter-cooled air is directed into the rear-stage purge-section 132.

In the rear-stage purge-section 132, the inter-cooled air is used to cool the rear-stage adsorption-material. Moreover, as the temperature of the regeneration material is high when entering the subsequent purge section, flow of purge air may cause some of the remaining moisture to be removed whereby the adsorbent material is even dryer when entering the humidity-removing-section. In one embodiment, the temperature of the air inside subsequent purge section is in the range 20 to 40 degrees Celsius, such as 30 degrees Celsius. The use of two purge sections is described previously in this application.

In the rear-stage humidity-removing-section, the humidity of the air is reduced even further. In one embodiment, the humidity of the air leaving the rear-stage humidity-removing-section is below minus 30 degrees, such as below minus 40 degrees, such as below minus 50 degrees, such as below minus 60 degrees, such as below minus 70 degrees.

Subsequently, the air is directed from the rear-stage humidity-removing-section and into the dry-room, via outlet 108.

As mentioned previously, the return air exiting the dry room outlet 112 is directed into the air-mixing-chamber 124.

In the alternative, or as a supplement, the purge-section is feed with air from a point upstream the inter-cooler unit 126 as is illustrated by the dotted line 134.

The purge air exiting the rear-stage purge-section is directed into the first heating unit 136 in which the air is heated so as to be able to contain a larger amount of moisture and so as to add sufficient energy to allow the moisture on the adsorbent to evaporate. Subsequently, the air is directed into the rear-stage regeneration-section 138 in which humidity is transferred from the rear-stage absorption-material to the air, whereby the absorption-material is dried.

Subsequently, the air continues to the second heating unit 140 in which the air is heated even further. Again this is done to increase the amount of moisture that may be contained in the air and to ensure that sufficient energy is provided to ensure that the moisture on the adsorbent will evaporate. It will be appreciated from the previous description of the invention according to the first aspect, that this second heating unit 140 is optional and not present in all embodiments of the invention.

The air heated in the second heating unit 140 then continues to the front-stage humidity-removing-section 142 in which moisture is transferred from the front-stage humidity-adsorbing-material to the air, whereby the adsorbing-material is dried.

Finally the air exits the rotary air drying apparatus 104 through the outlet 116.

## Claims

1. A rotary air drying apparatus for use in connection with a dry chamber defining a dry-chamber inlet and a dry-chamber outlet, the rotary air drying apparatus comprising:
- a front-stage adsorption-rotor comprising a front-stage adsorption-material and defining a front-stage humidity-removing-section which is adapted to remove moisture in air passing there-through, and a front-stage regeneration-section which is adapted to regenerate the front-stage adsorption-material,
- a rear-stage adsorption-rotor comprising a rear-stage adsorption-material and defining a rear-stage humidity-removing-section which is adapted to remove moisture in air passing there-through and a rear-stage regeneration-section which is adapted to regenerate the rear-stage adsorption-material, the rear-stage adsorption-rotor further comprising a rear-stage purge-section;
- a pre-cooler unit defining a pre-cooler inlet and a pre-cooler outlet, the pre-cooler unit being arranged to cool fresh air entering the pre-cooler inlet so as to remove moisture from the fresh air by lowering its dew point below a first predetermined dew-point, the pre-cooler outlet being arranged to supply pre-cooled air to the front-stage humidity-removing-section;
- an inter-cooler unit defining an inter-cooler inlet and an inter-cooler outlet, the inter-cooler outlet being fluidly connected to the rear-stage humidity-removing-section such that inter-cooled air flows from the inter-cooler outlet to the rear-stage humidity-removing-section, wherein the inter-cooler unit is adapted to lower the dew-point of air to a second predetermined dew point, and wherein the inter-cooler inlet is fluidly connected to the front-stage humidity removing section;
- a first heating-unit defining a first heating-inlet and a first heating-outlet, the first heating-inlet being fluidly connected to the rear-stage purge-section and the first heating-outlet being fluidly connected to the rear-stage regeneration-section;
wherein the rear-stage regeneration-section is fluidly connected to the front-stage regeneration-section;
wherein air exiting the front-stage humidity removing section is mixed with return air exiting the dry chamber outlet such that a resulting mixed air is generated;
wherein the resulting air mixture is fed into the inter-cooler inlet; and
wherein the rear-stage purge-section is supplied with the mixed air and/or inter-cooled air.

2. A rotary air drying apparatus according to claim 1, wherein the front-stage adsorption-rotor is configured to remove moisture from the pre-cooled air to a dew point below zero degrees Celsius.

3. A rotary air drying apparatus according to any of the preceding claims, wherein the front-stage adsorption-rotor defines a front-stage adsorption-volume which is below 40 percent of a rear-stage adsorption-volume of the rear-stage adsorption rotor.

4. A rotary air drying apparatus according to any of the preceding claims, further comprising an air-mixing-chamber into which the return air and the air exiting the front-stage humidity removing section is fed and out of which the mixed air is fed to the inter-cooler.

5. A rotary air drying apparatus according to any of the preceding claims, further comprising a second heating-unit which defines a second heating-inlet into which air from the rear-regeneration section is fed and a second heating-outlet which is arranged to feed air into the first-regeneration section.

6. A rotary air drying apparatus according to any of the preceding claims, further comprising a controller which is adapted to control the rotary air drying apparatus on the basis of input from a humidity-sensor provided in the air drying apparatus and/or a temperature-sensor provided in the air drying apparatus so as to ensure a predetermined humidity and/or temperature in an area of the respective sensors.

7. A rotary air drying apparatus according to claim 6, wherein a first temperature-sensor is arranged to determine the temperature of air fed into the front-stage regeneration section and wherein the controller is adapted to control the air drying apparatus such that the temperature of the air fed into the front-stage regeneration section is above 60 degrees Celsius.

8. A rotary air drying apparatus according to claim 7, wherein the controller is adapted to control the second heating-unit so as to control the air drying apparatus such that the temperature of the air fed into the front-stage regeneration section is above 60 degrees Celsius.

9. A rotary air drying apparatus according to , wherein a second temperature-sensor is arranged to determine the temperature of the inter-cooled air and wherein the controller is adapted to control the air drying apparatus such that the temperature of the inter-cooled air is below 15 degrees Celsius.

10. A rotary air drying apparatus according to claim 9, wherein the controller is adapted to control the inter-cooler unit so as to ensure that the inter-cooled air is below 15 degrees Celsius.

11. A rotary air drying apparatus according to any of the preceding claims, wherein the controller is adapted to control the first heating-unit such that the temperature of the air exiting the first heating-unit is above 110 degrees Celsius.

12. An air drying system comprising an air drying apparatus according to any of the preceding claims, and a dry chamber according to any of the preceding claims.

13. An air drying apparatus for use in connection with a dry chamber defining a dry-chamber inlet and a dry-chamber outlet, the air drying apparatus comprising:
- a front-stage adsorption-apparatus comprising a front-stage adsorption-material and defining a front-stage humidity-removing-section which is adapted to remove moisture in air passing there-through, and a front-stage regeneration-section which is adapted to regenerate the front-stage adsorption-material,
- a rear-stage adsorption-apparatus comprising a rear-stage adsorption-material and defining a rear-stage humidity-removing-section which is adapted to remove moisture in air passing there-through and a rear-stage regeneration-section which is adapted to regenerate the rear-stage adsorption-material, the rear-stage adsorption-apparatus further comprising a rear-stage purge-section;
- a pre-cooler unit defining a pre-cooler inlet and a pre-cooler outlet, the pre-cooler unit being arranged to cool fresh air entering the pre-cooler inlet so as to remove moisture from the fresh air by lowering its dew point below a first predetermined dew-point, the pre-cooler outlet being arranged to supply pre-cooled air to the front-stage humidity-removing-section;
- an inter-cooler unit defining an inter-cooler inlet and an inter-cooler outlet, the inter-cooler outlet being fluidly connected to the rear-stage humidity-removing-section such that inter-cooled air flows from the inter-cooler outlet to the rear-stage humidity-removing-section, wherein the inter-cooler unit is adapted to lower the dew-point of air to a second predetermined dew point, and wherein the inter-cooler inlet is fluidly connected to the front-stage humidity removing section;
- a first heating-unit defining a first heating-inlet and a first heating-outlet, the first heating-inlet being fluidly connected to the rear-stage purge-section and the first heating-outlet being fluidly connected to the rear-stage regeneration-section;
wherein the rear-stage regeneration-section is fluidly connected to the front-stage regeneration-section;
wherein air exiting the front-stage humidity removing section is mixed with return air exiting the dry chamber outlet such that a resulting mixed air is generated;
wherein the resulting air mixture is fed into the inter-cooler inlet; and
wherein the rear-stage purge-section is supplied with the mixed air and/or inter-cooled air.
